# FASCICULE DE BREVET EUROPEEN

(11) **EP 2 248 661 B1**
(45) Date de publication et mention de la délivrance du brevet: **25.01.2017**
(21) Numéro de dépôt: 10161785.0
(22) Date de dépôt: 03.05.2010
(51) Int. Cl.: B32B 7/02, B32B 7/06, B32B 27/08

(54) **CALE À FEUILLES PELABLES DE DIFFÉRENTES ÉPAISSEURS**
ABSTANDSELEMENT MIT ABZIEHBAREN SCHICHTEN VERSCHIEDENER DICKEN
SHIM WITH PEELABLE LAYERS OF DIFFERENT THICKNESSES

(30) Priorité: 04.05.2009 FR 0952950
(43) Date de publication de la demande: 10.11.2010
(73) Titulaire: Société LAMECO, 78190 Trappes (FR)
(72) Inventeur: Gastel, Yann Maurice, 78760 Jouars-Pontchartrain (FR)
(74) Mandataire: Thinat, Michel

(56) Documents cités:
- EP-A1- 1 284 224
- FR-A1- 2 716 138
- US-A- 4 526 641

## Description

L'invention concerne une cale d'épaisseur pelable. Des cales pelables sont déjà connues, notamment des brevets FR2854098B1, FR2831095B1 et FR2716138B1.

Pour obtenir une cale d'épaisseur voulue, il suffit de prendre une cale pelable comprenant un empilement de feuilles collées les unes sur les autres dont chaque épaisseur élémentaire est parfaitement déterminée et dont le cumul des épaisseurs donne une épaisseur initiale supérieure à l'épaisseur voulue. On décolle alors une quantité de feuilles en nombre égal au quotient de la différence entre l'épaisseur initiale et l'épaisseur voulue par l'épaisseur élémentaire de sorte qu'on obtient l'épaisseur voulue avec une haute précision en comptant simplement le nombre de feuilles que l'on décolle.

La précision obtenue sur l'épaisseur voulue, est d'autant meilleure que l'épaisseur élémentaire est faible. Il est aussi intéressant de disposer d'une cale d'épaisseur initiale que l'on connaît bien et qui puisse être utilisée pour de nombreuses épaisseurs possibles à vouloir. Cependant, un écart trop grand entre l'épaisseur initiale et l'épaisseur voulue peut alors nécessiter une quantité de feuilles à peler en nombre tel qu'il est source d'erreur de comptage ou pour le moins considérablement consommateur en temps d'exécution.

Une démarche logique consiste naturellement à empiler des feuilles d'épaisseurs élémentaires élevées qu'il suffit de peler en petit nombre dans un premier temps pour approcher rapidement l'épaisseur voulue et des feuilles de faible épaisseur qu'il suffit de peler elles aussi en petit nombre dans un second temps pour atteindre l'épaisseur voulue avec une haute précision. Chacun des deux nombres étant variable en fonction de l'écart qui sépare l'épaisseur initiale de l'épaisseur voulue, l'idée qui vient immédiatement à l'esprit est celle de mettre les feuilles d'épaisseur élémentaire élevée sur une face de la cale et les feuilles de faible épaisseur élémentaire sur l'autre face.

Toutefois, la notion de faible ou élevée pour l'épaisseur élémentaire est tout à fait relative. A l'échelle macroscopique, les feuilles sont vues très fines et il est difficile de distinguer les deux types de feuilles.

Comme l'enseignait déjà le brevet FR2716138B1, un matériau intéressant pour l'élaboration des cales pelables, est le polyéthylène téréphtalate qui possède de bonnes qualités de résistance mécanique, thermique et électrique. Ce matériau possède aussi certaines qualités de transparence bien connues lorsqu'il est polymérisé sous forme vitreuse en couches fines.

Il a été envisagé d'imprimer sur une feuille centrale de la cale, des symboles qui vus par transparence à travers les feuilles qui recouvrent de part et d'autre la feuille centrale, indiquent quelle est la face de la feuille que l'on regarde. Vus à l'endroit en regardant une face, les symboles seront masqués ou vu à l'envers en regardant l'autre face selon que la feuille centrale est opaque ou transparente. Dans le document EP1284224, il est prévu une feuille centrale d'identification comportant au moins un signe distinctif agencé pour être visible par transparence au travers seulement du groupe concerné de feuilles.

L'idée précédemment envisagée est séduisante a priori, mais possède en réalité de nombreux inconvénients. Elle impose une transparence suffisante non seulement des feuilles mais aussi de l'empilement des feuilles lui même qui peut, en absence de précautions particulières, passer rapidement de transparent à translucide et poser un problème de lecture des symboles. Elle est inutilisable pour de nombreux matériaux aux caractéristiques thermomécaniques intéressantes mais ne possédant pas un niveau de transparence suffisant. L'idée précédemment envisagée est essentiellement restreinte à un usage de matériaux tels que les polyesters, mais pose de sérieux problèmes de mise en oeuvre pour des matériaux tels que par exemple les polyimides qui sont colorés, souvent ambrés et qui possèdent pourtant d'excellentes propriétés thermiques. Sans avoir la prétention de faire une liste exhaustive de tous les inconvénients d'une impression à coeur de la cale avec lecture par transparence à travers les feuilles à peler, on peut encore citer le coût engendré par l'écriture des symboles, le choix difficilement décidable entre une petite taille de symboles adaptée à des cales de petites dimensions ou fortement ouvragées mais présentant des difficultés de lecture, notamment en environnement industriel, et une grande taille de symboles de lecture plus aisée tant que les symboles restent entiers mais rendus indiscernables lorsque l'usinage de la cale pour l'adapter à son usage de destination, détruit une part importante de ces symboles.

L'invention a pour but de remédier aux problèmes de l'état antérieur des la technique sans présenter les inconvénients des solutions connues.

De manière à atteindre ce but, l'invention a pour objet une cale d'épaisseur comprenant au moins une première feuille de première épaisseur prédéterminée qui adhère à une première face plane de la cale de manière à pouvoir être pelée sans être déchirée et au moins une deuxième feuille de deuxième épaisseur prédéterminée qui adhère à une deuxième face plane de la cale opposée à la première face plane de manière à pouvoir être pelée sans être déchirée. La cale d'épaisseur conforme à l'invention est remarquable en ce que la deuxième feuille comporte au moins une autre caractéristique physique que l'épaisseur, uniformément différente de la première feuille, caractérisée en ce que ladite caractéristique physique comprend une métallisation du matériau polymère de façon à réfléchir la lumière.

Particulièrement aussi, une caractéristique physique est relative à un coefficient de transmission de l'électricité.

Particulièrement encore, la première feuille est constitué d'un film de matériau polymère translucide ou transparent et la deuxième feuille est constituée d'un film de matériau polymère traité de façon à réfléchir la lumière.

Plus particulièrement, la première feuille est constitué d'un film de matériau polymère électriquement isolant et la deuxième feuille est constituée d'un film de matériau polymère traité de façon à conduire l'électricité sur au moins l'une de ses surfaces.

La deuxième feuille est constituée d'un film de matériau polymère métallisé.

De préférence, la deuxième feuille est recouverte d'un film métallique sur une surface de contact de la deuxième feuille qui adhère à la deuxième face de la cale d'épaisseur.

Les différents modes de réalisations possibles comprennent de manière intéressante ceux dans lesquels les feuilles sont constituées d'un matériau qui comprend du polyéthylène téréphtalate, ceux dans lesquels le matériau constituant la deuxième feuille comprend de l'aluminium, et ceux dans lesquels les feuilles sont traversées par au moins un trou qui traverse la cale d'épaisseur de façon à permettre le passage d'au moins une tige à travers la cale d'épaisseur.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue en perspective d'une cale pelable selon l'invention ; et
- la figure 2 est une vue en perspective d'une cale pelable selon l'invention après usinage.

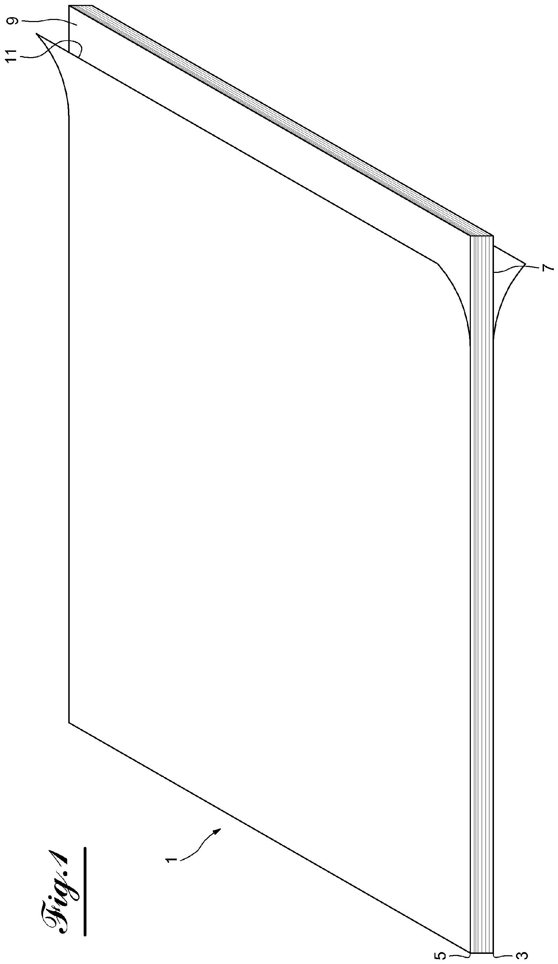

La figure 1 montre une cale d'épaisseur 1 comprenant des feuilles 3, 5, empilées les unes sur les autres et liées entre elles deux à deux par une couche infinitésimale de matériau adhésif répartie entre une face supérieure 9 de feuille inférieure et une face inférieure 11 de feuille supérieure 5. Les caractéristiques mécaniques du matériau adhésif permettent de peler une à une les feuilles sans les dénaturer, notamment sans les déchirer.

On distingue deux empilements superposés de feuilles sur la figure 1. Les feuilles de l'empilement inférieur ont chacune une même épaisseur élémentaire, par exemple de 100 µm, de 200 µm ou d'une valeur spécifique comprise entre ces deux valeurs. Les feuilles de l'empilement supérieur ont chacune une même épaisseur élémentaire, par exemple de 25 µm. Ainsi, l'enlèvement de la feuille 3 de la face plane 7, lorsque la feuille 3 a une épaisseur élémentaire de 200 µm, a le même effet que l'enlèvement de huit feuilles telles que la feuille 5 de la face plane 9 lorsque la feuille 5 a une épaisseur de 25 µm. Il va de soi qu'en retournant la cale 1, les notions de face supérieure et inférieure sont inversées sans rien changer sur la structure de la cale et ses effets techniques.

La cale peut être retournée de nombreuses fois avant d'être mise à son épaisseur finale et positionnée dans son lieu de destination.

Les feuilles de l'exemple illustré sont avantageusement constituées de fibres tissées imprégnées d'un matériau polymère ou de films de matériaux polymères. Les matériaux polymères présentent des caractéristiques mécaniques intéressantes en termes de légèreté. Un matériau polymère tel que le polyéthylène téréphtalate, donne à un film un caractère transparent ou translucide et électriquement isolant.

On donne à chacune des feuilles qui ont la même épaisseur que la feuille 5, une caractéristique physique uniformément différente des feuilles qui ont la même épaisseur que la feuille 3, en traitant le matériau polymère qui constitue la feuille 5 de façon à réfléchir la lumière ou à conduire l'électricité sur au moins l'une de ses surfaces.

Un coefficient de transmission de la lumière différent pour les feuilles de même épaisseur que la feuille 3 et pour les feuilles de même épaisseur que la feuille 5, permet à un être humain de distinguer visuellement les feuilles les unes des autres avec aisance dans un large champ angulaire, bien utile en environnement industriel.

Le coefficient de transmission de la lumière peut être modifié en chargeant le matériau polymère en particules opaques de type minéral ou polymère cristallin, ou en particules métalliques.

Un coefficient de transmission de l'électricité différent pour les feuilles de même épaisseur que la feuille 3 et pour les feuilles de même épaisseur que la feuille 5, permet à un robot de distinguer par signal électrique les feuilles les unes des autres avec célérité pour un grand nombre de cales, bien utile en environnement automatisé.

Le coefficient de transmission de l'électricité peut être modifié en recouvrant la feuille 5, et chaque feuille de même épaisseur de façon identique, avec un film métallique. Le film métallique disposé sur la surface de contact 11 de la feuille 5 qui adhère à la face 9 de la cale d'épaisseur sous la feuille 5, permet de garder des caractéristiques externes isolantes de la cale 1 qui peuvent être utiles pour certaines applications. Le film métallique disposé sur la surface libre de la feuille 5, permet à un palpeur de mesurer une conductivité électrique avant de peler la feuille. Pour recouvrir chaque feuille de faible épaisseur avec un film métallique avant de l'empiler pour réaliser la calle, on peut utiliser des techniques proches de celles utilisées dans la fabrication d'emballages agroalimentaires. De façon à ce que le film métallique reste fixé au matériau polymère de la feuille à laquelle il appartient lors du pelage, la couche adhésive entre feuilles est dimensionnée pour présenter des caractéristiques d'adhérence plus faible que celle qui lie le film métallique au film polymère ou au tissu imprégné d'une même feuille.

On notera que l'un ou l'autre des coefficients modifiables peut être obtenu en métallisant le matériau polymère qui constitue la feuille 5 et chacune des feuilles de même épaisseur. Notamment, la métallisation est réalisable par addition d'aluminium pour ses caractéristiques de légèreté, de conductivité électrique, de tenue mécanique après laminage en faible épaisseur et de réflexion de la lumière.

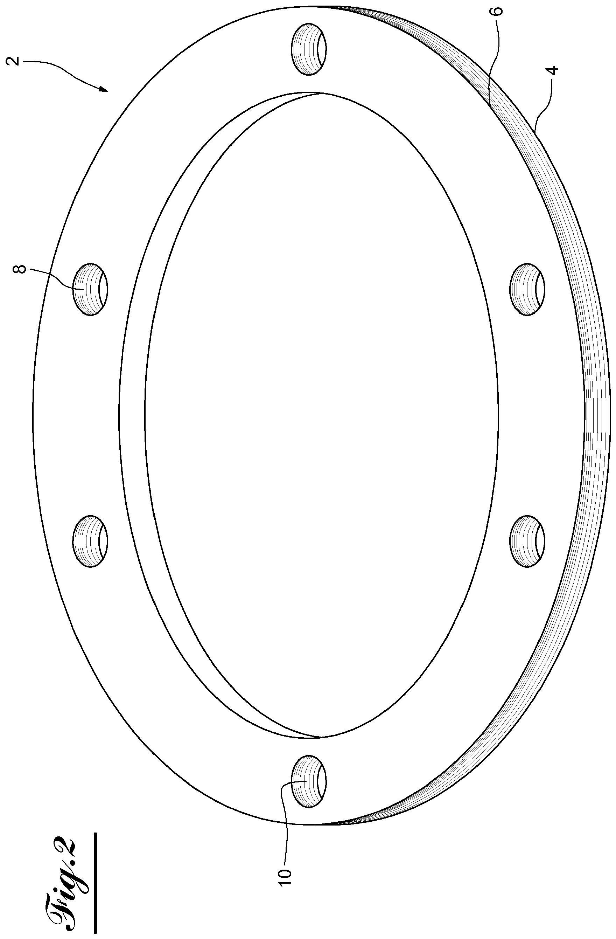

La figure 2 montre une cale d'épaisseur 2 obtenue après usinage à façon de la cale 1 précédemment expliquée en référence à la figure 1.

Ainsi, chacune des feuilles de même épaisseur que la feuille 4, possède les mêmes caractéristiques physiques que la feuille 3. Chacune des feuilles de même épaisseur que la feuille 6, possède les mêmes caractéristiques physiques que la feuille 5.

L'uniformité de la différence de caractéristique physique décelable entre les feuilles d'épaisseur élémentaire égale à celle de la feuille 4 et les feuilles d'épaisseur élémentaire égale à celle de la feuille 6, permet de distinguer les deux types de feuilles quelque soit la complexité des découpes pour obtenir la cale 2 à partir de la cale 1.

La cale d'épaisseur 2 est traversée par de six trous 8, 10 qui permettent le passage de six tiges à travers la cale d'épaisseur pour la fixer dans son emplacement de calage. Chaque tige de vis, de boulon ou de rivet qui passe dans l'un des trous traversant les feuilles 4, 6, court-circuite les films métalliques de sorte qu'aucun effet de condensateur nocif ne se produise.

## Revendications

1. Cale d'épaisseur (1, 2) comprenant au moins :
- une première feuille (3, 4) constituée d'un matériau polymère et de première épaisseur prédéterminée qui adhère à une première face plane (7) de la cale de manière à pouvoir être pelée sans être déchirée ;
- une deuxième feuille (5, 6) constituée d'un matériau polymère et de deuxième épaisseur prédéterminée qui adhère à une deuxième face plane (9) de la cale opposée à la première face plane (7) de manière à pouvoir être pelée sans être déchirée ;
dans laquelle la deuxième feuille (5, 6) comporte au moins une autre caractéristique physique que l'épaisseur, différente de celle de la première feuille (3, 4), **caractérisée en ce que** ladite caractéristique physique, uniformément différente de la première feuille (3, 4), comprend une métallisation du matériau polymère de façon à réfléchir la lumière.

2. Cale d'épaisseur selon l'une des revendications précédentes, **caractérisée en ce que** ladite caractéristique physique est relative à un coefficient de transmission de l'électricité.

3. Cale d'épaisseur selon l'une des revendications précédentes, **caractérisée en ce que** :
- la première feuille (3, 4) est constituée d'un film de matériau polymère translucide ou transparent ;
- la deuxième feuille (5, 6) est constituée d'un film de matériau polymère métallisé.

4. Cale d'épaisseur selon l'une des revendications précédentes, **caractérisée en ce que** :
- la première feuille (3, 4) est constituée d'un film de matériau polymère électriquement isolant ;
- la deuxième feuille (5, 6) est constituée d'un film de matériau polymère traité de façon à conduire l'électricité sur au moins l'une de ses surfaces.

5. Cale d'épaisseur selon l'une des revendications précédentes, **caractérisée en ce que** la deuxième feuille (5, 6) est recouverte d'un film métallique sur une surface de contact (11) de la deuxième feuille qui adhère à la deuxième face (9) de la cale d'épaisseur.

6. Cale d'épaisseur selon l'une des revendications précédentes, **caractérisée en ce que** les feuilles sont constituées d'un matériau qui comprend du polyéthylène téréphtalate.

7. Cale d'épaisseur selon l'une des revendications précédentes, **caractérisée en ce que** la deuxième feuille (5, 6) est constituée d'un matériau qui comprend de l'aluminium.

8. Cale d'épaisseur selon l'une des revendications précédentes, **caractérisée en ce que** les feuilles (4, 6) sont traversées par au moins un trou (8, 10) qui traverse la cale d'épaisseur (2) de façon à permettre le passage d'au moins une tige à travers la cale d'épaisseur.

9. Cale d'épaisseur selon l'une des revendications précédentes, **caractérisée en ce qu'**elle comprend un empilement de premières feuilles comprenant chacune la caractéristique physique de métallisation et un empilement de deuxièmes feuilles.

## Patentansprüche

1. Abstandselement (1, 2), umfassend mindestens:
- eine erste Schicht (3, 4), die aus einem Polymermaterial gebildet ist und mit einer ersten vorbestimmten Dicke, die an einer ersten ebenen Fläche (7) des Abstandselements derart anhaftet, dass sie ohne zu zerreißen abziehbar ist,
- eine zweite Schicht (5, 6), die aus einem Polymermaterial gebildet ist und mit einer zweiten vorbestimmten Dicke, die an einer zweiten ebenen Fläche (9) des Abstandselements gegenüber der ersten ebenen Fläche (7) derart anhaftet, dass sie ohne zu zerreißen abziehbar ist,
wobei die zweite Schicht (5, 6) mindestens ein anderes physikalisches Merkmal als die Dicke aufweist, das von der ersten Schicht (3, 4) unterschiedlich ist, **dadurch gekennzeichnet, dass** das physikalische Merkmal, das sich gleichermaßen von der ersten Schicht (3, 4) unterscheidet, eine Metallisierung des Polymermaterials derart umfasst, dass das Licht reflektiert wird.

2. Abstandselement nach einem der vorangehenden Ansprüche, **dadurch gekennzeichnet, dass** das physikalische Merkmal relativ zu einem Elektrizitätsübertragungskoeffizienten ist.

3. Abstandselement nach einem der vorangehenden Ansprüche, **dadurch gekennzeichnet, dass**:
- die erste Schicht (3, 4) von einem Film aus durchscheinendem oder durchsichtigem Polymermaterial gebildet ist,
- die zweite Schicht (5, 6) von einem Film aus metallisiertem Polymermaterial gebildet ist.

4. Abstandselement nach einem der vorangehenden Ansprüche, **dadurch gekennzeichnet, dass**:
- die erste Schicht (3, 4) von einem Film aus elektrisch isolierendem Polymermaterial gebildet ist,
- die zweite Schicht (5, 6) von einem Film aus Polymermaterial gebildet ist, das derart bearbeitet ist, dass die Elektrizität über mindestens eine ihrer Oberflächen geleitet wird.

5. Abstandselement nach einem der vorangehenden Ansprüche, **dadurch gekennzeichnet, dass** die zweite Schicht (5, 6) mit einem Metallfilm auf einer Kontaktoberfläche (11) der zweiten Schicht bedeckt ist, die an der zweiten Fläche (9) des Abstandselements haftet.

6. Abstandselement nach einem der vorangehenden Ansprüche, **dadurch gekennzeichnet, dass** die Schichten von einem Material gebildet sind, das Polyethylenterephthalat umfasst.

7. Abstandselement nach einem der vorangehenden Ansprüche, **dadurch gekennzeichnet, dass** die zweite Schicht (5, 6) von einem Material gebildet ist, das Aluminium umfasst.

8. Abstandselement nach einem der vorangehenden Ansprüche, **dadurch gekennzeichnet, dass** die Schichten (4, 6) von mindestens einem Loch (8, 10) durchquert sind, das das Abstandselement (2) derart durchquert, dass der Durchgang mindestens einer Stange durch das Abstandselement erlaubt ist.

9. Abstandselement nach einem der vorangehenden Ansprüche, **dadurch gekennzeichnet, dass** es eine Stapelung erster Schichten umfasst, die jeweils das physikalische Merkmal Metallisierung umfassen, und eine Stapelung zweiter Schichten.

## Claims

1. A shim (1, 2), comprising at least:
- a first sheet (3, 4) made up of a polymer material and having a first predetermined thickness that adheres to a first planar face (7) of the shim so as to be able to be peeled without tearing;
- a second sheet (5, 6) made up of a polymer material and having a second predetermined thickness that adheres to a second planar face (9) of the shim opposite the first planar face (7) so as to be able to be peeled without tearing;
wherein the second sheet (5, 6) includes at least one physical characteristic other than the thickness that is different from that of the first sheet (3, 4), **characterized in that** said physical characteristic, uniformly different from the first sheet (3, 4), comprises a metallization of the polymer material so as to reflect the light.

2. The shim according to one of the preceding claims, **characterized in that** said physical characteristic relates to an electricity transmission coefficient.

3. The shim according to one of the preceding claims, **characterized in that**:
- the first sheet (3, 4) is made up of a film of translucent or transparent polymer;
- the second sheet (5, 6) is made up of a film of metallized polymer.

4. The shim according to one of the preceding claims, **characterized in that**:
- the first sheet (3, 4) is made up of a film of electrically insulating polymer;
- the second sheet (5, 6) is made up of a polymer film treated so as to conduct electricity on at least one of its surfaces.

5. The shim according to one of the preceding claims, **characterized in that** the second sheet (5, 6) is covered with a metal film on one contact surface (11) of the second sheet that adheres to the second face (9) of the shim.

6. The shim according to one of the preceding claims, **characterized in that** the sheets are made from a material that comprises polyethylene terephthalate.

7. The shim according to one of the preceding claims, **characterized in that** the second sheet (5, 6) is made up of a material that comprises aluminum.

8. The shim according to one of the preceding claims, **characterized in that** the sheets (4, 6) are traversed by at least one hole (8, 10) that traverses the shim (2) so as to allow the passage of at least one rod through the shim.

9. The shim according to one of the preceding claims, **characterized in that** it comprises a stack of first sheets each comprising the metallization physical characteristic and a stack of second sheets.
